# EUROPEAN PATENT SPECIFICATION

(11) **EP 2 704 557 B1**
(45) Date of publication and mention of the grant of the patent: **13.05.2015**
(21) Application number: 12712701.7
(22) Date of filing: 11.04.2012
(51) Int. Cl.: A01K 1/03

(54) **DOG KENNEL PROVIDED WITH MULTIPURPOSE OPENING MEANS**
HUNDEZWINGER MIT MEHRZWECK-ÖFFNUNGSVORRICHTUNG
NICHE POUR CHIEN MUNIE D'UN MOYEN D'OUVERTURE MULTIFONCTIONS

(30) Priority: 06.05.2011 IT VR20110093
(43) Date of publication of application: 12.03.2014
(73) Proprietor: FERPLAST S.P.A., 36070 Castelgomberto (IT)
(72) Inventor: VACCARI, Carlo, I-36070 Castelgomberto (IT)
(74) Representative: Sandri, Sandro
(86) International application number: PCT/EP2012/056589
(87) International publication number: WO 2012/152518

(56) References cited:
- FR-A- 1 220 677
- GB-A- 377 893
- GB-A- 515 598

## Description

### TECHNICAL FIELD

This invention concerns a dog kennel made from plastic, wood or any other material (insulated or not) suitable for the purpose, comprising one or more walls which, appropriately opened and/or removed, become a platform for the dog, positioned outside the kennel and adjacent to it.

More specifically, this invention refers to a dog kennel with one wall becoming a platform, in such a way that the dog has a much wider space and can lie down on the floor of the kennel and the platform without the hindrance of the door.

The dog kennel according to the invention envisages the creation of a platform from one of the walls, also permitting the platform to be simply closed when not in use, avoiding the problem of where to store it.

According to the invention, opening a wall of the kennel makes it possible to ventilate the structure, a particularly useful condition especially on summer days.

In addition, the presence of at least one mobile wall of the kennel according to the invention presents a fundamental advantage in that, by removing this wall or positioning it as a platform it is much easier to clean the inside of the kennel, otherwise usually only possible by removing the roof cover.

This invention can be applied in the field of accessories for pets, in particular in the sector of dogs' beds or kennels.

### BACKGROUND ART

It is known that dog kennels are rigid structures made from wood or moulded plastic, consisting of four vertical walls which rest on a base and which are closed at the top by a roof.

The front part of the kennel presents an opening which allows the animal to enter and exit.

It is also known that various types of dog kennels are available on the market, in some cases with walls that can be opened/removed.

The purpose of the presence of removable walls is to allow the product to be dismantled and/or modular. All manufacturers, in fact, want the kennel to be easy to assemble and dismantle.

These products may also foresee the possibility of removing one or more walls, but this is only an end unto itself and not connected with the possible comfort of the animal.

Although presenting the possibility of removing one or more walls, known structures have the problem that, at some times of the day, the dog prefers to stay close to its kennel (which represents its home) but has to decide whether to stay inside or outside the kennel as the access area does not allow it to be half in and half out.

Moreover, also according to known solutions, staying outside the kennel is uncomfortable and not very hygienic for the dog as it would have to lie directly on the ground; platforms are therefore often used, placed in front of or next to the kennel, to allow the dog to lie down comfortably and stay clean.

The problems encountered with these solutions are substantially the following:
- these platforms are additions and, when they are not in use, they have to be stored somewhere, also because they are generally not very weatherproof, especially when made from wood.
- it is difficult for the dog to lie down half in the kennel and half on the platform: it has to choose one or the other.

There are products which already have a built-in outside platform and a wide enough opening, but these solutions too have problems connected with their size and with the fact that the platform is not removable, as well as being very expensive.

Document GB-A-515,598 discloses a dog kennel constituted by four side walls and a roof. The four walls are connected to respective hinges at the base of the kennel. The kennel may be mounted by setting the four side walls in a vertical position and placing a roof on these walls. The conformation of the edges of the walls is such to prevent that a single wall may be rotated towards a horizontal position when the kennel is mounted. As a result, a side wall may not be rotated by 90° in order to provide a platform. The kennel may be dismantled, e.g. for cleaning purposes, by removing the roof and rotating the four side walls about their respective pivots, thereby leaving the base of the kennel free in order to clean it.

### DESCRIPTION OF THE INVENTION

The present invention provides a kennel for pets, in particular for dogs, and which makes it possible to eliminate or at least reduce the drawbacks described above.

The invention also proposes to provide a dog kennel that is easy to produce and which foresees the possibility of removing or opening at least one wall in various ways in order to convert the closed kennel to an open kennel provided with a platform.

This is achieved by means of a kennel for pets whose characteristics are described in the main claim.

The dependent claims of the solution in question describe advantageous embodiments of the invention.

The main advantages of this solution, in addition to those deriving from its construction simplicity, concern first of all the fact that the presence of at least one wall that can be transformed into a platform allows the dog to have a much larger space comprising the inside of the kennel and the adjacent platform positioned at the same level, and to lie comfortably in the kennel and on the platform, without the hindrance of the door.

In addition, since the platform is formed from one of the walls, when it is no longer needed it is sufficient to close it without the problem of where to store it.

A further advantage provided by the kennel according to the invention is that by opening a wall of the kennel it is possible to easily ventilate the inside of the kennel, a particularly useful condition especially on summer days.

The possibility of completely opening one of the walls which then becomes a platform also makes cleaning the inside of the kennel much easier, considering that with known solutions it is generally necessary to remove the roof to clean inside the kennel.

### DESCRIPTION OF THE DRAWINGS

Other features and advantages of the invention will become clear on reading the description given below of one embodiment, provided as a non-binding example, with the help of the accompanying drawings, in which:

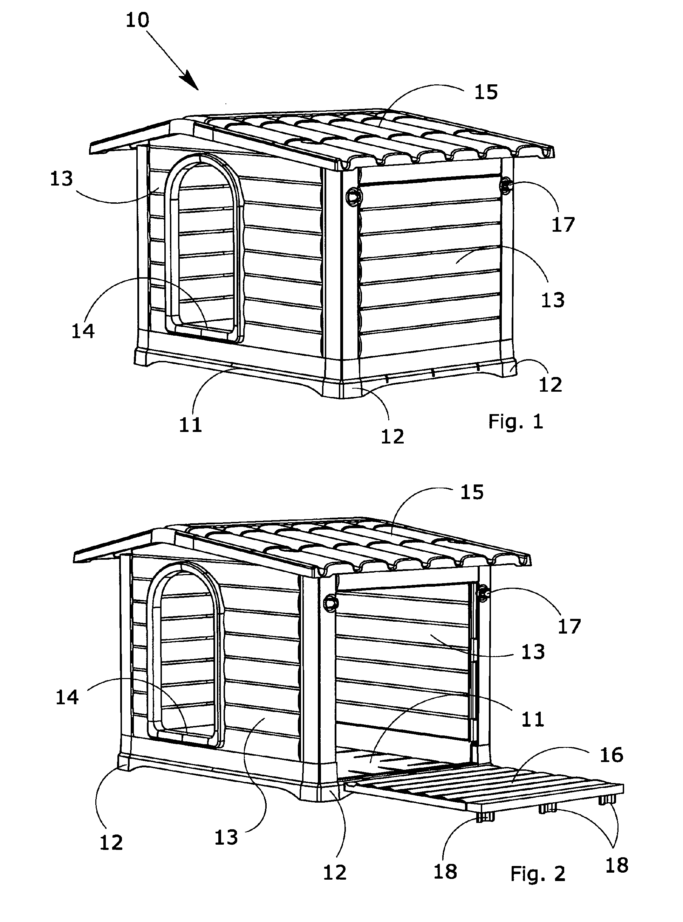

- figures 1 and 2 represent schematic views of the dog kennel according to the invention in the open and closed position in the version with a side opening;

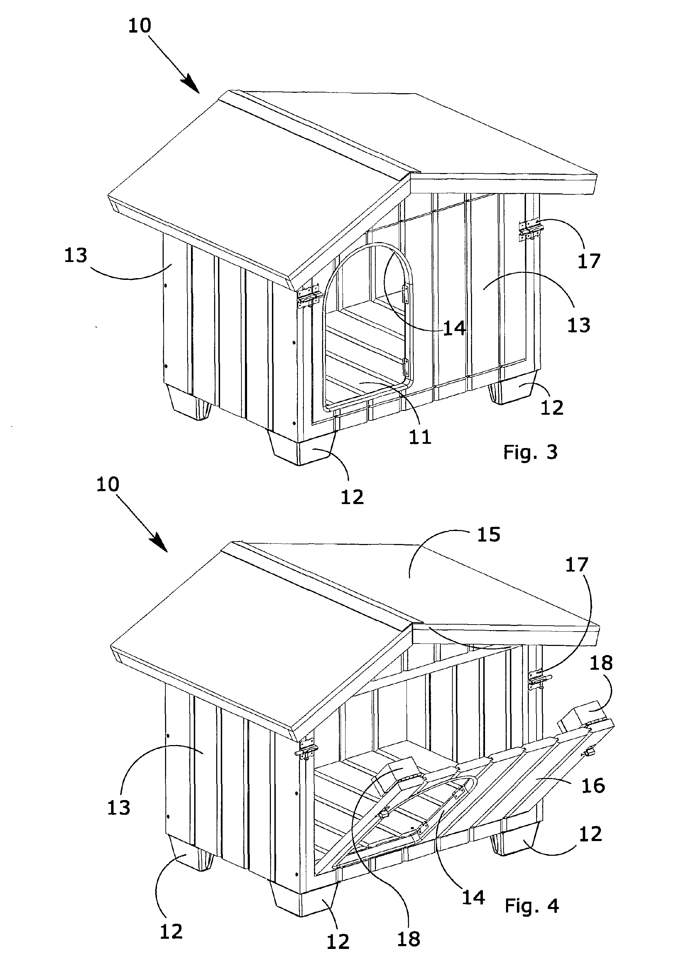

- figure 3 is a view of the kennel in the closed position in the version with a front opening;
- figures 4 to 6 represent views of the kennel in the version with a front opening in various stages of positioning the platform starting from the front wall;
- figure 7 is a schematic view of the kennel with the front wall completely open;
- figure 8 represents a schematic view of the kennel according to the invention in which one of the removable walls is used as an extension of the roof to cover the platform.

### DESCRIPTION OF ONE EMBODIMENT OF THE INVENTION

With reference to the accompanying figures, the dog kennel according to the invention, indicated overall with reference number 10, substantially consists of a classic structure with a base 11 which can be supported by plinths 12 allowing air to circulate and above all to insulate the base from the ground, said base being provided with four vertical walls 13 at least one of which is provided with an opening 14 through which the dog can enter and exit.

The kennel is closed at the top by a roof 15 which is generally, but not exclusively, the saddle roof type.

According to the invention, the kennel, which can be made from wood, plastic or any other material suitable for the purpose, and also from material suitable for the assembly of the product, consists of a structure which foresees the possibility of opening at least one of the walls 13, preferably the front wall, and that this opening wall can become a horizontal platform 16 positioned at the same level as the base of the kennel.

From the construction point of view, the wall/platform 16 consists of a fold-down wall which is hinged at its lower edge to the base and which at its upper edge is held in the closed position by means of a latch mechanism (17) which can hold it in place and prevent the dog from opening it.

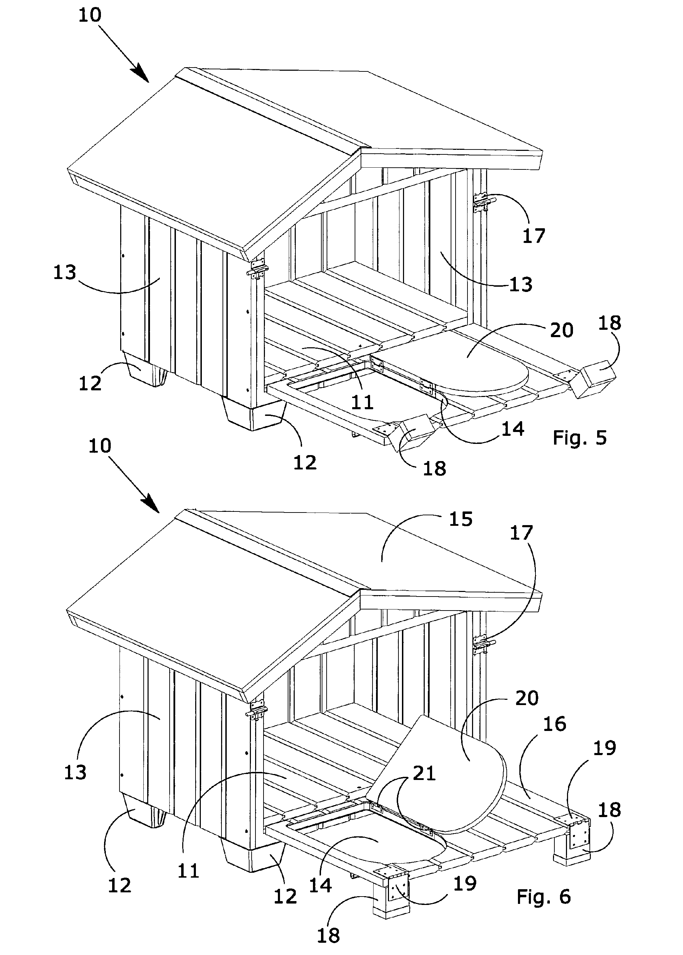

To allow the wall 16 to remain in the open position with the platform horizontal and level with the base 11 of the kennel, the wall is provided with fold-down feet 18 or plinths which in the closed position fold back inside the kennel remaining in the upper inner part, in a position which can not inconvenience the dog in any way or limit its inside living space, while in the open position they are rotated outwards by means of appropriate hinges 19, clearly visible in figure 6, or other similar mechanisms suitable for this purpose.

If the openable wall/platform is the front wall, that is to say the wall with the access opening 14, the kennel is provided with an auxiliary door 20, which can be moved angularly on hinges 21, or slid on appropriate guides, or simply removed and replaced over the opening 14, so as to cover and close the opening 14 in order to obtain a uniform and continuous surface.

The solution described and illustrated is subject to numerous variations, including the opening of one or more of the other walls of the kennel, for example both sides of the kennel.

According to another embodiment, the support feet are an integral part of the wall/platform, so that the platform can be perfectly aligned with the inner floor 11 of the kennel, since the presence of steps could create problems for the dog.

These feet can either be fitted by the customer when the platform is folded down, with separate feet snap-fixed or screw-fixed, or are the fold-away type being an integral part of the wall, folding outwards.

It is also foreseen that the openable wall 16 is not permanently attached to the base, but can be detached and snap-fixed back into place, if necessary upside down, to become a platform for the dog. In this case, the feet can be an integral part of the wall and/or coupled to the inner part of the openable wall.

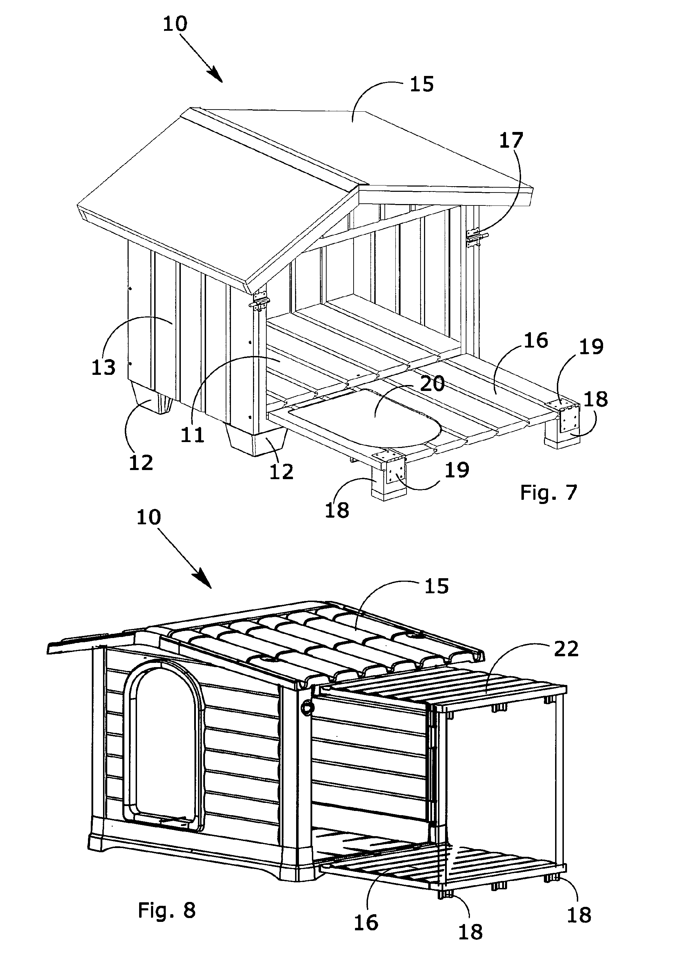

According to another possible variation, as can be seen in figure 8, the kennel can be provided with more than one openable wall, with a first wall being positioned as a platform and another, indicated with 22, forming an extension of the roof, hooking on to the existing roof to extend over the platform and also to protect it.

The invention is described above with reference to a preferred embodiment. It is nevertheless clear that the invention is susceptible to numerous variations which lie within the scope of its disclosure, in the framework of technical equivalents.

## Claims

1. A kennel (10) for dogs or other animals including pets, or also for other uses, consisting of a structure with a base (11) and a roof (15), said base being equipped with four vertical walls (13) at least one of which being provided with an opening (14) for the dog to pass through, at least one of said walls (13) consisting of a pivotable wall which is hinged at its lower edge to the base (11) **characterised in that** the upper edge of said at least one pivotable wall (13) is provided with a latch mechanism (17) which, when it is in the closed latched position, holds in place said pivotable vertical wall (13) while, when it is in the open unlatched position, allows a rotation movement of said wall (13) about its hinges so as to transform said wall into a platform arranged substantially at the same level as the base (11) of the kennel.

2. The dog kennel (10) according to claim 1, **characterised in that** to allow the wall (16) to remain horizontal and level with the base (11) of the kennel when in its open platform position, it is provided with fold-down support feet (18) or plinths which in the closed position fold back inside the kennel remaining in the upper inner part, while in the open position they are rotated outwards by means of appropriate hinges (19) or other similar mechanisms suitable for this purpose.

3. The dog kennel (10) according to any one of the preceding claims, **characterised in that** if the openable wall/platform is the wall with the access opening (14), the kennel is provided with an auxiliary door (20), which is movable angularly on hinges (21), so as to cover and close the opening (14) in order to obtain a uniform and continuous surface.

4. The dog kennel (10) according to claim 3, **characterised in that** said auxiliary door (20) is movable by translation or by removal and reinsertion.

5. The dog kennel (10) according to any one of claims from 2 to 4, **characterised in that** said support feet (18) are an integral part of the wall/platform, so that the platform is perfectly aligned with the inner floor (11) of the kennel, thereby avoiding the presence of steps.

6. The dog kennel (10) according to claim 2, **characterised in that** said feet (18) are constructed separately and are either snap-fixed or screw-fixed.

7. The dog kennel (10) according to claim 2, **characterised in that** said support feet (18) fold away and are integrated in the wall and rotate from the inside towards the outside by means of hinges, or are fully cut from the wall, preferably the inner part.

8. The dog kennel (10) according to any one of the preceding claims, **characterised in that** it is provided with a plurality of pivotable walls, with a first wall being positioned as a platform and another forming an extension of the roof, hooking on to the existing roof to extend over the platform and also to protect it.

## Patentansprüche

1. Hütte (10) für Hunde oder andere Tiere, einschließlich Haustiere, oder auch für andere Verwendungszwecke, die aus einer Struktur mit einem Boden (11) und einem Dach (15) besteht, wobei der Boden mit vier senkrechten Wänden (13) ausgestattet ist, von denen mindestens eine mit einer Öffnung (14) zum Hindurchbewegen für den Hund ausgestattet ist, wobei mindestens eine der Wände (13) aus einer schwenkbaren Wand besteht, die an ihrem unteren Rand schwenkbar an dem Boden (11) befestigt ist, **dadurch gekennzeichnet, dass** der obere Rand der mindestens einen schwenkbaren Wand (13) mit einem Riegelmechanismus (17) versehen ist, der, wenn er sich in der geschlossenen, verriegelten Position befindet, die schwenkbare senkrechte Wand (13) an ihrem Platz hält, während er, wenn er sich in der offenen, unverriegelten Position befindet, eine Drehbewegung der Wand (13) um ihre Scharniere ermöglicht, um die Wand in eine Plattform umzuwandeln, die im Wesentlichen auf demselben Niveau wie der Boden (11) der Hütte angeordnet ist.

2. Hundehütte (10) nach Anspruch 1, **dadurch gekennzeichnet, dass** sie, um zu ermöglichen, dass die Wand (16) waagerecht und auf demselben Niveau wie der Boden (11) der Hundehütte bleibt, wenn sie sich in ihrer offenen Plattform-Position befindet, mit herunterklappbaren Stützfüßen (18) oder Sockeln versehen ist, die in der geschlossenen Position in die Hütte zurückgeklappt werden und in dem oberen inneren Teil bleiben, während sie in der offenen Position mithilfe geeigneter Scharniere (19) oder anderer ähnlicher zu diesem Zweck geeigneter Mechanismen nach außen gedreht werden.

3. Hundehütte (10) nach einem der vorangehenden Ansprüche, **dadurch gekennzeichnet, dass**, wenn die öffnungsfähige Wand/Plattform die Wand mit der Zugangsöffnung (14) ist, die Hütte mit einer zusätzlichen Tür (20) versehen ist, die an Scharnieren (21) winkelbeweglich ist, sodass sie die Öffnung (14) bedeckt und schließt, damit eine einheitliche und durchgehende Oberfläche entsteht.

4. Hundehütte (10) nach Anspruch 3, **dadurch gekennzeichnet, dass** die zusätzliche Tür (20) durch Translation oder durch Entfernen und Wiedereinsetzen bewegbar ist.

5. Hundehütte (10) nach einem der Ansprüche 2 bis 4, **dadurch gekennzeichnet, dass** die Stützfüße (18) ein integraler Bestandteil der Wand/Plattform sind, sodass die Plattform perfekt mit dem inneren Boden (11) der Hütte fluchtet, wodurch das Vorhandensein von Stufen vermieden wird.

6. Hundehütte (10) nach Anspruch 2, **dadurch gekennzeichnet, dass** die Füße (18) separat ausgebildet sind und entweder einschnappend oder mithilfe von Schrauben fixiert sind.

7. Hundehütte (10) nach Anspruch 2, **dadurch gekennzeichnet, dass** die Stützfüße (18) weggeklappt und in die Wand integriert werden und sich mithilfe von Scharnieren von der Innenseite zu der Außenseite drehen oder vollständig von der Wand getrennt sind, bevorzugt dem inneren Teil.

8. Hundehütte (10) nach einem der vorangehenden Ansprüche, **dadurch gekennzeichnet, dass** sie mit mehreren schwenkbaren Wänden versehen ist, wobei eine erste Wand als eine Plattform positioniert ist und eine andere eine Verlängerung des Daches bildet, die an das vorhandene Dach angehängt wird, damit sie sich über die Plattform erstreckt und auch, damit sie diese schützt.

## Revendications

1. Niche (10) pour chiens ou autres animaux, y compris les animaux domestiques, ou encore pour d'autres utilisations, comprenant une structure pourvue d'une base (11) et d'un toit (15), ladite base étant équipée de quatre parois verticales (13) dont l'une au moins est munie d'une ouverture (14) permettant le passage du chien, l'une au moins desdites parois (13) consistant en une paroi pivotante qui est reliée de façon articulée au niveau de son bord inférieur à la base (11), **caractérisée en ce que** le bord de ladite au moins une paroi pivotante (13) est pourvu d'un mécanisme de verrouillage (17) qui, lorsqu'il est dans la position verrouillée fermée, maintient en place ladite paroi verticale pivotante (13), tandis que, lorsqu'il est dans la position déverrouillée ouverte, permet un mouvement de rotation de ladite paroi (13) autour de ses charnières de manière à transformer ladite paroi en une plate-forme disposée sensiblement au même niveau que la base (11) de la niche.

2. Niche (10) pour chiens selon la revendication 1, **caractérisée en ce que**, pour permettre à la paroi (16) de rester horizontale et de niveau avec la base (11) de la niche lorsqu'elle est dans sa position de plate-forme ouverte, elle est équipée de socles ou de pieds de support (18) dépliables qui, dans la position fermée, se replient à l'intérieur de la niche en restant dans la partie intérieure supérieure tandis que, dans la position ouverte, ils sont tournés vers l'extérieur au moyen de charnières appropriées (19) ou d'autres mécanismes similaires appropriés à cet effet.

3. Niche (10) pour chiens selon l'une quelconque des revendications précédentes, **caractérisée en ce que**, si la paroi/plate-forme ouvrable est la paroi pourvue de l'ouverture d'accès (14), la niche est pourvue d'une porte auxiliaire (20), qui est mobile angulairement sur des charnières (21), de manière à recouvrir et fermer l'ouverture (14) afin d'obtenir une surface uniforme et continue.

4. Niche (10) pour chiens selon la revendication 3, **caractérisée en ce que** ladite porte auxiliaire (20) est mobile par translation ou par retrait et réinsertion.

5. Niche (10) pour chiens selon l'une quelconque des revendications 2 à 4, **caractérisée en ce que** lesdits pieds de support (18) font partie intégrante de la paroi/plate-forme, de sorte que la plate-forme est parfaitement alignée avec la surface intérieure (11) de la niche, ce qui évite la présence de marches.

6. Niche (10) pour chiens selon la revendication 2, **caractérisée en ce que** les pieds (18) sont construits séparément et sont fixés par encliquetage ou par vissage.

7. Niche (10) pour chiens selon la revendication 2, **caractérisée en ce que** lesdits pieds de support (18) se replient et sont intégrés dans la paroi et tournent de l'intérieur vers l'extérieur au moyen de charnières, ou sont entièrement découpés dans la paroi , de préférence la partie intérieure.

8. Niche (10) pour chiens selon l'une quelconque des revendications précédentes, **caractérisée en ce qu'**elle est pourvue d'une pluralité de parois pivotante, une première paroi étant positionnée en tant que plate-forme et une autre formant un prolongement du toit, s'accrochant au toit existant pour s'étendre par-dessus la plate-forme et également la protéger.
